Europäisches Patentamt

(19) European Patent Office

Office européen des brevets

(11) **EP 0 344 563 B1**

(12) # EUROPEAN PATENT SPECIFICATION

(45) Date of publication and mention
of the grant of the patent:
**24.01.1996 Bulletin 1996/04**

(51) Int. Cl.$^6$: **A62D 3/00**, C01B 33/22,
B09B 3/00, C04B 18/04

(21) Application number: **89109148.0**

(22) Date of filing: **20.05.1989**

(54) **Process for inactivating industrial wastes of chrysotile asbestos**

Verfahren zum Unwirksammachen von Betriebsabfällen von chrysotilischem Asbest

Procédé d'inactivation de déchets industriels de l'amiante chrysotile

(84) Designated Contracting States:
**AT BE CH DE ES GB IT LI NL SE**

(30) Priority: **30.05.1988 IT 2079988**

(43) Date of publication of application:
**06.12.1989 Bulletin 1989/49**

(73) Proprietors:
 • **Filini, Luigi**
  **I-25069 Villa Carcina (Province of Brescia) (IT)**
 • **Calzavacca, Luigi**
  **I-25028 Verolanuova (Province of Brescia) (IT)**

(72) Inventors:
 • **Filini, Luigi**
  **I-25069 Villa Carcina (Province of Brescia) (IT)**
 • **Calzavacca, Luigi**
  **I-25028 Verolanuova (Province of Brescia) (IT)**

(74) Representative: **Modiano, Guido, Dr.-Ing. et al**
 **I-20123 Milano (IT)**

(56) References cited:
 **DE-A- 3 728 787**

 • **CHEMICAL ABSTRACTS, vol. 100, no. 4, 23rd January 1984, page 179, abstract no.25641f, Columbus, Ohio, US; J. KOMINSKY et al.: "Health hazard evaluation report,Tweddle Litho Co., St. Clair Shores, Michigan"**
 • **CHEMICAL ABSTRACTS, vol. 91, no. 8, 20th August 1979, page 200, abstract no.60387v, Columbus, Ohio, US; H. de S. SANTOS et al.: "Thermal transformation of chrysotile studied by high resolution electron microscopy"**
 • **CHEMICAL ABSTRACTS, vol. 108, no. 10, 7th March 1988, page 394, abstract no.81424q, Columbus, Ohio, US; & JP-A-62 237 984**

## Description

The present invention relates to a process for inactivating industrial wastes of chrysotile asbestos.

As is known, the general term asbestos or amianthus defines a group of fibrous silicates such as serpentine and amphiboles.

The asbestos most commonly available in nature and consequently most used in industry is chrysotile asbestos or fibrous serpentine, which is classified as Canadian, Rhodesian, South African, Greek and Italian according to its place of origin.

Chrysotile asbestos is a hydrated magnesium silicate with a whitish or silver-gray color, which, since it is fibrous, porous, acid-resistant, fireproof and scarcely heat-conducting, is used extensively in industry for a large number of articles, such as cardboard, cloth, ropes, gaskets, filters, fabrics and sheets for protective clothing and for paving.

Asbestos is furthermore used in considerable amounts as a construction material, mixed with cement, to manufacture corrugated slabs for roofings, flat slabs for coverings, ceilings and partitions, pipes for irrigation lines, for sewers, for flues, hoods and the like.

Chrysotile asbestos is also frequently used to manufacture brake linings for motor vehicles.

In practice, all the above described workings produce a considerable amount of wastes or scrap which must be conveniently disposed of.

A severe problem which arises resides in the fact that chrysotile asbestos breaks by rubbing, friction or wear, releasing very light and volatile fibers which may easily be inhaled.

The danger of asbestos absorbed by inhaling has been known for a long time, since it can cause severe pathologies which may be schematically summarized as asbestosis (pulmonary fibrosis limiting breathing), lung cancer, pleural mesotheliomas and others.

The only disposal system currently used is that of taking said scrap to controlled landfills, where means are provided to prevent the diffusion into the atmosphere of the inhalable fibers which can be emitted by chrysotile asbestos.

This method, besides being considerably expensive, does not radically solve the problem, since the potential danger of fibrous chrysotile asbestos persists and pollution phenomena may therefore occur, caused by factors which may in any manner elude the protective features which should be provided at the landfill.

In Chemical Abstracts, vol. 91, no. 8, 20th August 1979, page 200, abstract no. 60387v, Columbus, Ohio, US, experiments regarding the thermal transformation of chrysotile are disclosed, showing that no changes in the structure of chrysotile are observed by heating chrysotile at a temperature of less than 600 C, that at 650 C flaky crystallites of forsterite appear inside the amorphous fibrils and that the chrysotile structure is no longer observed at 700 C.

In Chemical Abstracts, vol. 100, no. 4, 23rd January 1984, page 179, abstract no. 26541f, Columbus, Ohio, US, it is discussed the theory that, as a result of the high surface temperature and severe abrasion that occurs during the braking action, the chrysotile of asbestos containing brakes, undergoes dehydroxylation and recrystallization to form the amorphous nontoxic mineral forsterite.

The aim of the present invention is to eliminate the above mentioned disadvantages by providing a process for inactivating industrial wastes of chrysotile asbestos which allows to modify chrysotile asbestos's chemical characteristics, converting it into a chemically inert nonvolatile product.

Within the scope of the above described aim, a particular object of the invention is to provide a process which can be executed with simple equipment and thoroughly eliminates any pollution problem.

Another object of the present invention is to provide a process for inactivating industrial wastes which by virtue of its peculiar characteristics of execution is capable of giving the greatest assurances of reliability and safety.

Not least object of the present invention is to provide a process which allows to obtain products which can be easily recycled and used in other industrial fields.

This aim and objects are achieved by a process for inactivating industrial wastes of chrysotile asbestos, according to the invention as defined in Claim 1.

Further characteristics and objects of the invention will be more apparent by the following description and drawings in which:

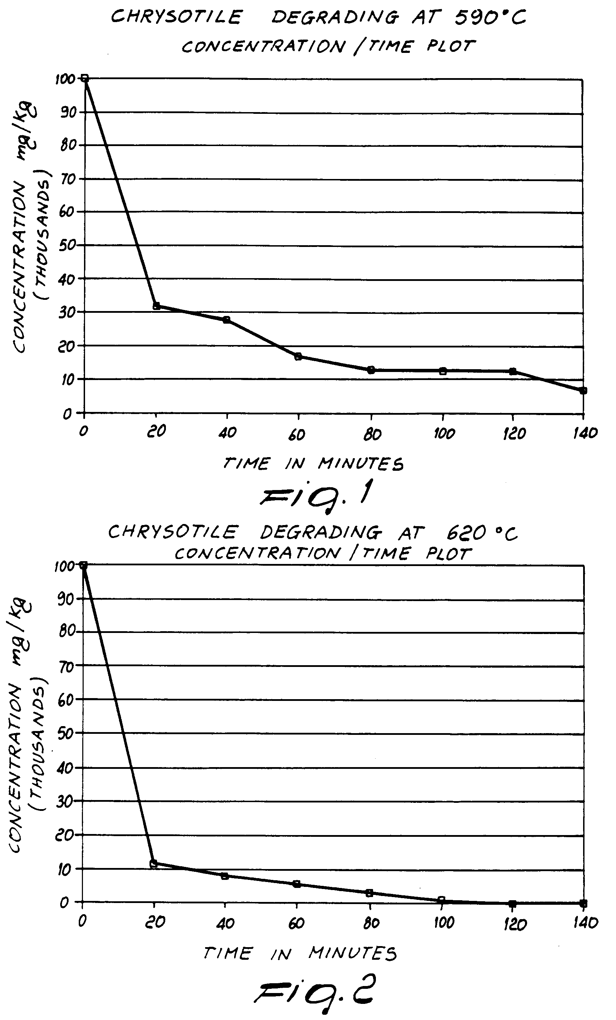

figure 1 is a plot showing the rate of inactivation of the chrysotile asbestos vs. time for a temperature of 590°C;
figure 2 is a plot similar to that of figure 1 for a temperature of 620°C ;

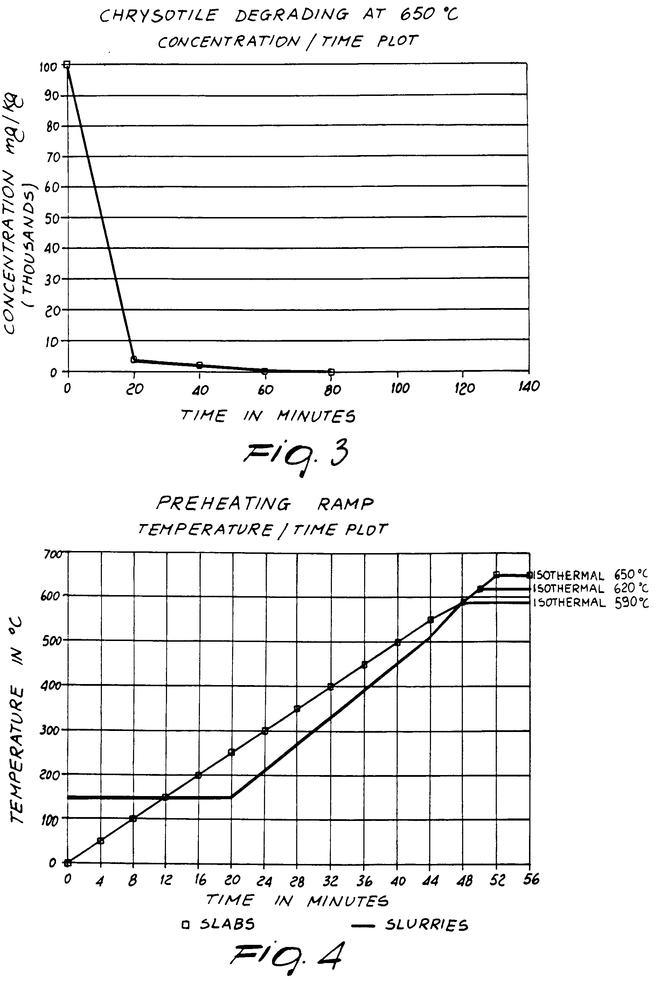

figure 3 is a plot similar to that of figures 1 and 2 for a temperature of 650° C;
figure 4 is a plot showing the preheating ramp vs. time, of the process, for slabs and slurries.

The process for inactivating industrial wastes of chrysotile asbestos according to the invention is substantially based on the fact that chrysotile asbestos can be considered as a hydrated magnesium silicate, the chemical formula whereof is $Mg_6Si_4O_{10}(OH)_8$, with an amount of water depending on the various types of chrysotile and having an average value of approximately 13%.

The inactivation process according to the invention is based on a pyrolytic asbestos attacking action which allows to eliminate the water present in the molecule, converting the fibrous chrysotile asbestos into another non-fibrous and inert silicate, and in particular into forsterite.

Experimental tests have shown that by heating the wastes or scrap of fibrous chrysotile asbestos to a temperature no lower than 580°C the fibrous chrysotile asbestos is converted into forsterite, which is a non-fibrous magnesium silicate.

Forsterite is an inert refractory mineral which is found in nature as a constituent of olivine. The conversion of chrysotile into forsterite occurs according to the reaction:

$$Mg_6Si_4O_{10}(OH)_8 \text{-------->} Mg_2SiO_4 + H_2O$$

The inactivation process is preferably performed in a furnace heated by methane or L.P.G. or in electric furnaces, allowing the obtainment of non-polluting fumes; it is also possible to use gas oil or combustible oils, but it is necessary to apply appropriate filters to eliminate the atmospheric pollution which may arise from such fuels.

The process according to the invention is absolutely non-polluting, since only water in the form of steam is discharged into the atmosphere in very small amounts; for example, if 100 kg of material containing 10% of chrysotile asbestos are treated, only 1.3 kg of water are discharged as steam into the atmosphere; the contribution of the above described conversion to atmospheric pollution is therefore absolutely irrelevant.

The time during which said conversion occurs depends to a very large extent on the thickness and on the configuration of the processed scrap.

Cement slabs 6 mm thick, containing 10% chrysotile asbestos, have been experimentally subjected to the treatment: after just 2 hours of treatment, the presence of chrysotile asbestos drops to less than 0.5%, while the same percentage of chrysotile asbestos dispersed in 15-mm thick slabs is converted by 99.5% into forsterite after approximately 5 hours of treatment. After 24 hours of heating the amount of residual chrysotile is lower than the detection limits of the instruments.

A considerable number of samples containing pure chrysotile asbestos or chrysotile asbestos dispersed in different matrices was subsequently subjected to inactivation treatment in order to verify the validity of the process. Once this operating step was accomplished successfully, testing continued to determine the duration of the inactivation treatment; three different temperatures (590°, 620° and 650°C) were set to verify if a modest increase in temperature caused a significant time saving and therefore reduced operating costs. It thus became necessary to find an operating method which allowed to overcome the problems ascribable to the matrix; the asbestos-lumber materials employed in fact differed in thickness, configuration and mass, and the amount of water present in the materials being tested also differed, with a limit value of approximately 70% in slurries. This finality was achieved by subjecting the test materials to a gradual preheating by means of a "temperature gradient", so as to reach the optimum condition in which the entire mass was uniformly at the inactivation treatment start temperature (measurements checked in multiple points of the sample); in the case of slurries it is necessary to eliminate the imbibition water by drying before the preheating of the mass begins. Once the test isothermal value (590°-620°-650°C) has been reached, the chrysotile inactivation process begins: the time (in minutes) indicated in the tables is calculated from this moment. Temperature is continuously monitored in the various points of the material, again by means of appropriately arranged digital pyrometers. The quantitative assessment of the residual chrysotile in the asbestos lumber was performed by X-ray diffraction on all the samples before and during the treatment. The data obtained are shown in the enclosed figures and indicate, by way of example, the preheating gradient performed for layers of 400x200x6 mm slabs stacked to a total thickness of 250 mm, for slurries of asbestos lumber with an average chrysotile content equal to 10%. Those data, as well as the actual inactivation treatment, show that the proposed aim, i.e. to obtain chrysotile percentages in the material lower than 1 per cent, as prescribed by international regulations (EPA), is achieved. Said data furthermore demonstrate the absolute effectiveness of the process and its versatility, due to its very short durations (at 650°C the presence of chrysotile drops below 0.5% in just twenty minutes) and to its rather low temperatures, with consequent low cost of the process. A similar behavior is obtained by treating pure chrysotile at 650°C in the same manner, raising the treatment time to 60 minutes.

The above described inactivation process can furthermore be advantageously extensively employed in the disposal of pure chrysotile and of asbestos lumber scrap or wastes and in general of materials in which asbestos is conglomerated together with inert inorganic loads; in this specific case, the system may be constituted by a simple tunnel furnace of the kind used in the ceramics industry, fitted with an adapted material loading and unloading system.

Another important aspect of the invention resides in that after the treatment the fibrous chrysotile asbestos is converted into forsterite, which is an inert component and can be used as load in preparing refractory elements in iron metallurgy or in cast-iron foundry, added for example to olivine or chromite sand. This offers the great advantage of using the wastes to produce an item which can be marketed again. Since it is totally inert, the material, once it has undergone the treatment, can be used as roadbed material or as filler for insulating interspaces in building.

A similar process may also be used if the chrysotile asbestos is included in plastic material, though in this case one must take into account that it is necessary to completely and correctly purify the fumes deriving from organic pyrolysis by providing a post-combustion treatment at an appropriate temperature.

From what has been described above it can thus be seen that the invention achieves the intended aim and objects; in particular, the fact is stressed that a process is provided which allows to chemically convert chrysotile asbestos into a substance, i.e. forsterite, which is chemically inert and consequently non-polluting, using extremely simple means which are furthermore competitive from an economical point of view.

## Claims

1. Use of industrial wastes of chrysotile asbestos inactivated by

   - gradually preheating said industrial wastes in the form of slabs or slurries by a temperature gradient of 100 °C/8 min. or 100 °C/7 min., respectively, so as to reach a substantially uniform temperature in the entire mass of said industrial wastes, said uniform temperature being of minimum 580 °C; and
   - maintaining said uniform temperature constant until the concentration of chrysotile asbestos in said wastes drops to less than 1%, by elimination of water and conversion in forsterite,

   as filler for preparing refractory elements.

2. Use of industrial wastes of chrysotile asbestos inactivated as in Claim 1, as, inert material for roadbeds.

3. Use of industrial wastes of chrysotile asbestos inactivated as in Claim 1, as filler in insulating interspaces in building.

4. Process for inactivating industrial wastes of chrysotile asbestos in the form of slabs or slurries, characterized in that it consists in the steps of:

   - gradually preheating said industrial wastes in the form of slabs or slurries by a temperature gradient of 100 °C/8 min. or 100 °C/7 min., respectively, until a substantially uniform temperature is reached in the entire mass of said industrial wastes, said uniform temperature being of minimum 580 °C; and
   - maintaining said uniform temperature constant until the concentration of chrysotile asbestos in said wastes drops to less than 1%, by elimination of water and conversion in forsterite.

5. Process according to claim 4, for inactivating industrial wastes in the form of slurries of chrysotile asbestos, characterized in that said slurries are dried to eliminate imbibition water before said preheating step.

6. Process according to Claim 4, characterized in that said steps are performed in a furnace heated by methane or by LPG.

7. Process according to Claim 4, characterized in that said steps are performed in an electric furnace.

## Patentansprüche

1. Verwendung von industriellen Chrysotilasbestabfällen, die inaktiviert wurden durch

   - ein allmähliches Vorheizen der industriellen Abfälle in der Form von Platten oder Schlämmen mit einem Temperaturgradienten von 100°C/8 min bzw. 100°C/7 min, um eine im wesentlichen einheitliche Temperatur in der gesamten Masse der industriellen Abfälle zu erreichen, wobei die einheitliche Temperatur ein Minimum von 580°C hat; und
   - das Konstanthalten der einheitlichen Temperatur bis die Konzentration des Chrysotilasbests in den Abfällen durch das Eliminieren von Wasser und die Umwandlung in Forsterit auf weniger als 1% sinkt,

   als Füllstoff bei der Herstellung von feuerfesten Elementen.

2. Verwendung von industriellen Abfällen mit Chrysotilasbest inaktiviert gemäß Anspruch 1 als Füllstoff für Straßenbettungen.

3. Verwendung von industriellen Abfällen mit Chrysotilasbest inaktiviert gemäß Anspruch 1, als Füllstoff beim Isolieren von Zwischenräumen in Gebäuden.

4. Verfahren zur Inaktivierung industrieller Chrysotilasbestabfälle in der Form von Platten oder Schlämmen, dadurch **gekennzeichnet**, daß es aus den Schritten besteht:

   - allmähliches Vorheizen der industriellen Abfälle in der Form von Platten oder Schlämmen mit einem Temperaturgradienten von 100°C/8 min bzw. 100°C/7 min, bis eine im wesentlichen einheitliche Temperatur in der gesamten Masse der industriellen Abfälle erreicht ist, wobei die einheitliche Temperatur ein Minimum von 580°C hat; und
   - Konstanthalten der einheitlichen Temperatur, bis die Konzentration des Chrysotilasbests in den Abfällen durch das Eliminieren von Wasser und die Umwandlung in Forsterit auf weniger als 1% sinkt.

5. Verfahren gemäß Anspruch 4 zum Inaktivieren industrieller Abfälle in der Form von Chrysotilasbestschlämmen, dadurch **gekennzeichnet**, daß die Schlämme getrocknet werden, um aufgenommenes Wasser vor dem Vorheizschritt zu eliminieren.

6. Verfahren gemäß Anspruch 4, dadurch **gekennzeichnet**, daß die Schritte in einem Ofen ausgeführt werden, der mit Methan oder mit Flüssiggas beheizt wird.

**7.** Verfahren gemäß Anspruch 4, dadurch **gekennzeichnet**, daß die Schritte in einem Elektroofen ausgeführt werden.

**6.** Procédé selon la revendication 4, caractérisé en ce que lesdites étapes sont réalisées dans un four chauffé par du méthane ou un gaz de pétrole liquéfié.

**7.** Procédé selon la revendication 4, caractérisé en ce que lesdites étapes sont réalisées dans un four électrique.

**Revendications**

**1.** Utilisation de déchets industriels d'amiante chrysotile inactivés par

- préchauffage progressif desdits déchets industriels, sous forme de croûtes ou de boues, par un gradient de température de 100°C/8 min ou de 100°C/7 min, respectivement, de manière à atteindre une température essentiellement uniforme dans la masse entière desdits déchets industriels, ladite température uniforme étant au minimum de 580°C; et
- maintien de ladite température uniforme constante jusqu'à ce que la concentration en amiante chrysotile dans lesdits déchets tombe à moins de 1%, par élimination de l'eau et conversion en forstérite,

comme charge pour préparer des éléments réfractaires.

**2.** Utilisation de déchets industriels d'amiante chrysotile inactivés selon la revendication 1, comme matériau inerte pour enrochement de routes.

**3.** Utilisation de déchets industriels d'amiante chrysotile inactivés selon la revendication 1, comme charge dans les espacements d'isolation en construction.

**4.** Procédé pour inactiver des déchets industriels d'amiante chrysotile sous forme de croûtes ou de boues, caractérisé en ce qu'il consiste en les étapes suivantes:

- préchauffage progressif desdits déchets industriels sous forme de croûtes ou de boues, par un gradient de température de 100°C/8 min ou de 100°C/7 min, respectivement, jusqu'à atteindre une température essentiellement uniforme dans la masse entière desdits déchets industriels, ladite température uniforme étant au minimum de 580°C; et
- maintien de ladite température uniforme constante jusqu'à ce que la concentration en amiante chrysotile dans lesdits déchets tombe à moins de 1%, par élimination de l'eau et conversion en forstérite.

**5.** Procédé selon la revendication 4, pour inactiver des déchets industriels sous forme de boues d'amiante chrysotile, caractérisé en ce que lesdites boues sont séchées pour éliminer l'imbibition de l'eau avant ladite étape de préchauffage.

CHRYSOTILE DEGRADING AT 590°C
CONCENTRATION / TIME PLOT

TIME IN MINUTES

Fig. 1

CHRYSOTILE DEGRADING AT 620 °C
CONCENTRATION / TIME PLOT

TIME IN MINUTES

Fig. 2

CHRYSOTILE DEGRADING AT 650 °C
CONCENTRATION / TIME PLOT

Fig. 3

PREHEATING RAMP
TEMPERATURE / TIME PLOT

□ SLABS        ── SLURRIES

Fig. 4